# NEUE EUROPÄISCHE PATENTSCHRIFT

(11) **EP 2 905 721 B2**
(45) Veröffentlichungstag und Bekanntmachung des Hinweises auf die Entscheidung über den Einspruch: **12.07.2023**
(45) Hinweis auf die Patenterteilung: 19.08.2020
(21) Anmeldenummer: 15153665.3
(22) Anmeldetag: 03.02.2015
(51) Int. Cl.: A47G 1/02, G06Q 30/02, G09F 27/00

(54) **Wandelementvorrichtung und System zur visuellen Informationsanzeige**
Wall element device and system for visual information display
Dispositif d'élément de paroi et système d'affichage d'informations visuelles

(30) Priorität: 05.02.2014 DE 102014101394
(43) Veröffentlichungstag der Anmeldung: 12.08.2015
(73) Patentinhaber: ad notam AG, 78247 Hilzingen (DE)
(72) Erfinder: Röttcher, Oliver, 78269 Volkertshausen (DE)
(74) Vertreter: Patent- und Rechtsanwälte Behrmann Wagner PartG mbB

(56) Entgegenhaltungen:
- EP-A2- 1 496 482
- WO-A1-2012/057457
- WO-A1-2012/119109
- DE-A1-102007 009 378
- DE-U1-202005 007 640
- ES-U- 1 077 949
- US-A1- 2012 081 620

## Beschreibung

Die vorliegende Erfindung betrifft eine Wandelementvorrichtung nach dem Oberbegriff des Hauptanspruchs. Ferner betrifft die vorliegende Erfindung ein System zur visuellen Informationsanzeige, zur datenmäßigen Interaktion und zur Datenkommunikation unter Nutzung einer derartigen gattungsgemäßen Wandelementvorrichtung.

Aus der DE 20 2005 007 640 U1 ist eine gattungsgemäße Wandelementvorrichtung bekannt. Ein derartiges modulartiges und üblicherweise großflächiges Wandelement eignet sich in günstiger Weise zur Raumgestaltung, und zwar sowohl in mobil-bewegbaren Anordnungen, wie etwa im Gewerbe- oder Messebereich, als auch zur stationären Befestigung und Montage, wobei insbesondere eine durch die Modulform realisierte feuchtigkeits- bzw. dampfgeschützte Realisierung die gattungsgemäße Vorrichtung günstig zur Anbringung in Bädern oder dergleichen Feuchträumen macht; die dann einer Benutzer- bzw. Bedienperson lediglich zugewandte und zugängliche gläserne Außenfläche bewirkt gleichermaßen einen zuverlässigen Schutz der hinter dieser Außenfläche vorgesehenen elektronischen Einheiten, wie etwa dem Flachbildschirm, als auch eine günstige, dauerhafte und attraktive Möglichkeit zur farblichen und/oder musterhaften Ausgestaltung, etwa für Kommunikations- und/oder Werbezwecke.

Besonders vorteilhaft wirkt sich bei dieser bekannten Vorrichtung bereits die Kombination aus dekorativer Bemusterung bzw. Verspiegelung einerseits und der Möglichkeit zur (geschützten) elektronischen Bilddarstellung mittels der hinter der gläsernen Außenfläche vorgesehenen Flachbildschirmeinheit aus; nicht zuletzt aus diesem Grund werden bekannte, gattungsgemäße Einheiten gemäß DE 20 2005 007 640 U1 in sich ständig erweiternden Nutzungs- und Montagefeldern eingesetzt.

Insbesondere die gattungsgemäß bekannte Verspiegelung, in Verbindung mit der elektronischen Bilddarstellung, macht die gattungsgemäße Vorrichtung besonders geeignet für die beschriebenen sanitären Anwendungen. Dabei haben sich (nicht zuletzt auch unterstützt durch die oben diskutierten günstigen Feuchtraumeigenschaften) sowohl Anwendungen im Privatbereich, als auch Anwendungen im öffentlich-sanitären Bereich als günstig und von Benutzern gern akzeptiert herausgestellt. So bieten etwa Hotels, Gastronomiebetriebe, Büros oder Verkehrsbauten zahlreiche Möglichkeiten, die gattungsgemäßen Wandelementvorrichtungen nutzbringend einzusetzen, wobei nicht nur die Nutzerpersonen eine mittels des (mindestens einen) Flachbildschirms dargebotene Informationsvermittlung gern annehmen, auch lässt sich durch Darstellung von Werbe- oder Verkaufsförderungsinformationen ein zusätzliches wirtschaftliches Ertragsfeld für einen Betreiber einer solchen Vorrichtung erschließen; es hat sich etwa herausgestellt, dass vor einer verspiegelten Wandelementvorrichtung etwa mit dem Rasieren befasste Personen besonders aufmerksam für gewisse zugehörige Informationen, im genannten Beispiel etwa von Konsumgüterherstellern im Rasier- und Pflegebereich, sind.

Allerdings gibt die aus dem genannten gattungsbildenden Stand der Technik bekannte Technologie einem befassten Betrachter keine Möglichkeit zur unmittelbaren Reaktion auf eine dargestellte elektronische Information, etwa die exemplarische Werbebotschaft. So muss bei gewecktem Interesse etwa der Betrachter sich dann eine Werbebotschaft merken und dann zu einem späteren Zeitpunkt mit üblichen Datenkommunikationsmitteln, etwa einem Smartphone, entsprechende Nachforschungen oder Transaktionen tätigen. Gleiches gilt für andere, insbesondere produktbezogene Interaktionen mit der aus der DE 20 2005 007 640 U1 bekannten Infrastruktur; eine gezielte (etwa produktbezogene) Abfrage ist praktisch nur mit zusätzlichen weiteren Daten- bzw. Telekommunikationsmitteln auf Nutzerseite möglich.

Nun bietet jedoch gerade der als bevorzugtes Anwendungsfeld identifizierte öffentliche Sanitärbereich (wobei hierfür insbesondere dann auch noch Garderoben, Ankleiden, Friseur- und Kosmetiksalons oder dergleichen verspiegelte Bereiche gelten können) die Möglichkeit, interessierten Kunden auch physische Produkte in Form von Proben, Demonstrationsexemplaren, Broschüren oder dergleichen zu unterbreiten. Auch bezüglich dieser Proben - sobald das Interesse einer Testperson dann geweckt ist - bedarf es dann aktiver Nachforschungen bzw. (elektronischer) Kontaktaufnahmen über gesonderte Kommunikationsmittel, um im Hinblick auf weitergehende Informationen oder Transaktionen tätig zu werden.

US2012/081620 A1 offenbart, insbesondere in der Figur 1 in Verbindung mit den Absätzen [0031] bis [0034], einen Medizinschrank (100), welcher einen Bildschirm (106) und eine Steuerung (110) umfasst. Die Steuerung ist dazu eingerichtet, den Bildschirm zu bedienen bzw. zu steuern, wobei die Steuerung als eine Infrarot-Fernbedienung oder als eine berührungssensitive Oberfläche ausgebildet sein kann. Auch kann vorgesehen sein, ein Smartphone über eine drahtlose Verbindung derart mit der Steuerung zu verbinden, dass eine auf dem Smartphone betriebene Anwendung, wie bspw. ein Video, auf dem Bildschirm des Medizinschranks ausgegeben bzw. abgespielt werden kann.

Aufgabe der vorliegenden Erfindung ist es daher, das Nutzungsspektrum gattungsgemäßer Wandelementvorrichtungen zu erweitern und zu flexibilisieren, dabei insbesondere einer Bedien- bzw. Benutzerperson an oder vor der Wandelementvorrichtung die Möglichkeit zu geben, aktiv und insbesondere produktbezogen mit zugehörigen Anbietern bzw. Informationslieferanten in Kommunikation zu treten, um daraufhin ggf. auch weitergehende Transaktionen, wie eine elektronische Kauftransaktion, durchführen zu können.

Die Aufgabe wird durch die Wandelementvorrichtung mit den Merkmalen des Hauptanspruchs 1 gelöst. Vorteilhafte Weiterbildungen der Erfindung sind in den Unteransprüchen beschrieben.

In erfindungsgemäß vorteilhafter Weise ermöglichen es nunmehr die (bezogen auf die Person) hinter der Wandplatte vorgesehenen Detektormittel, dass eine (produktbezogene) Interaktion der Bedienperson mit elektronischen Steuermitteln stattfindet und in diese Interaktion dann die weiteren Funktionskomponenten, insbesondere auch der Flachbildschirm mit der dadurch ermöglichten elektronischen Bilddarstellung, einbezogen werden. Exemplarisch kann also etwa ein Benutzer in einer Sanitärumgebung das Bedürfnis entwickeln, über ein von ihm benutztes Produkt, etwa eine Shampooflasche, nähere Informationen zu erhalten. Die vorliegende Erfindung ermöglicht es daraufhin, dass die Bedienperson die Flasche in den Erfassungsbereich der Detektormittel bringt, diese das Objekt identifizieren und daraufhin dann zunächst ein geeignetes, für den Benutzer wirksames Bestätigungs- bzw. Quittungssignal abgeben. **Dies wird** in Form einer elektronischen Bilddarstellung auf dem Flachbildschirm erfolgen, etwa dergestalt, dass entsprechend der Detektion zunächst die Erfassung des Objekts bestätigt wird, zugehörige Objektinformationen auf dem Flachbildschirm dargestellt werden und dann, in der bevorzugten Weiterbildung, dem Benutzer ein weitergehender Informations- bzw. Kauftransaktionsdialog angeboten wird, so dass - in einem psychologisch günstigen Kaufmoment - der Benutzer bereits eine Kauftransaktion für das konkrete Objekt bewirken und auslösen kann. Etwa für den Fall, dass die erfindungsgemäße Wandelementvorrichtung in einem Badbereich eines Hotels vorgesehen ist, könnte dann weitergehend die physische Distribution des gekauften Artikels unmittelbar über das Hotel erfolgen und entsprechende zeitnahe Befriedigung des Kundenwunsches bewirken.

Es wird deutlich, dass durch die erfindungsgemäße Technologie die Möglichkeiten der gattungsbildenden Wandelementvorrichtung im Hinblick auf aktive und zeitnahe Interaktion deutlich verbessert werden, wobei insbesondere die bereits vorhandene Wandplatten-Infrastruktur eine vorteilhafte und synergistische Möglichkeit bietet, die Detektormittel sicher (d.h. vor Feuchtigkeit, gleichermaßen aber auch vor Vandalismus oder dergleichen unerwünschten Eingriffen geschützt) und einfach bedienbar vorzusehen; weiterhin vorteilhaft in Nachbarschaft zum Flachbildschirm ist die bevorzugte visuelle Unterstützung realisiert, welche sowohl unterstützend im Hinblick auf einen Bedien- und Ablaufprozess, als auch zur weiteren (bevorzugt produktbezogenen) Informationsübermittlung ausgestaltet sein kann. Insoweit ermöglicht es die vorliegende Erfindung dann, nicht nur den Benutzer in einem Werbe-, Informations- und Vermarktungskontext optimal zu führen, sondern diesen zudem durch weitere visuelle Reize zu unterstützen. In diesem Zusammenhang und weiterbildungsgemäß sind auch die vorteilhaft vorgesehenen Audio-Ausgabemittel zu betrachten, welche nicht nur dann die Informationsfülle und das Betrachtererlebnis weiter verbessern können, sondern technisch-synergistisch durch Nutzung der Wandplatte gleichermaßen als Schutz und Resonanzfläche eine elegante Übertragung des erzeugten Audiosignals in den Benutzerraum vor dem Wandelement ermöglicht.

Insbesondere vor dem bevorzugten und diskutierten Einsatzkontext in Sanitär-, Bad-, Feucht- und/oder Kosmetikräumen ist es dabei erfindungsgemäß bevorzugt, das Wandelement geeignet modulartig auszugestalten, insbesondere durch rückwärtige Verkleidung und/oder Abdichtung eine Wasser-, Dampf- und/oder Feuchtigkeitsbeständigkeit sicherzustellen und die Wandplatte entsprechend einer gewünschten Einrichtung geeignet auch großflächig auszugestalten, so dass etwa auch vollständige Wandverkleidungen mittels der erfindungsgemäßen Wandelementvorrichtung in Betracht kommen. Unabhängig davon ist es gleichwohl im Rahmen der Erfindung ermöglicht, die Wandelementvorrichtung auch mittels geeigneter (ggf. mobiler) Trägereinheiten an einem Einsatzort temporär vorzusehen, wie es etwa an einem Messestand, einem Konferenzort oder dergleichen günstig sein kann, so dass insoweit die erfindungsgemäße Wandelementvorrichtung nicht notwendigerweise zur Festmontage, sondern auch zur transportablen Nutzung realisiert sein kann.

Die erfindungsgemäßen Detektormittel sind weiterbildungsgemäß und vorteilhaft zur Abtastung eines Codes, etwa eines ein- oder zweidimensionalen Barcodes, auf dem zu detektierenden Objekt, ergänzend zum Zusammenwirken mit einer aktiven oder passiven Hochfrequenzeinheit am Objekt ausgebildet. Dabei kann es sich entweder um bekannte RFID oder NFC-Technologien handeln, welche als solche als bekannt vorauszusetzen und in Verbindung mit der Erfindung nutzbar einsetzbar sind, je nach Ausgestaltung der Detektormittel ist es gleichwohl auch ermöglicht, insbesondere im weiterbildungsgemäß begrenzten frontalen und/oder seitlichen Erfassungsbereich, eine Bilderfassung des Objekts vorzunehmen, auf Basis derer dann die weitergehenden Informationsverarbeitungsschritte, eingeschlossen Ausgabe des Bestätigungs- bzw. Quittungssignals, entstehen. Wiederum in der Weiterbildung dieser Varianten bietet es sich an, visuell-optische Detektormittel so vorzusehen, dass diese entweder durch die gläserne Außenfläche hindurch auf das gehaltene Objekt gerichtet sind (ggf. in geeignet kleinen Aperturöffnungen einer Kamera oder dergleichen), dagegen könnten (wiederum ansonsten bekannte) Scanner-Technologien zur Barcode-Erfassung von rückwärts durch die gläserne Außenfläche hindurch ohne physische Öffnung (alternativ: mittels eines im Flächenmuster ausgebildeten Ausschnitts) mit dem Objekt interagieren. Geeignete Hochfrequenzantennen auf oder an der Rückfläche der Wandplatte ermöglichen zudem das problemlose Zusammenwirken mit entsprechenden Hochfrequenzpartnern am Objekt durch die Wandplatte hindurch.

Insbesondere mit dem Zweck, Fehlfunktionen durch Bewegung der Bedienperson selbst, sonstige Ereignisse oder Artefakte in einem Erfassungsbereich der Detektormittel auszublenden, ist es im Rahmen bevorzugter Weiterbildungen der Erfindung bevorzugt, einen maximalen Erfassungsbereich auszubilden, welcher frontal, d.h. im Hinblick auf einen maximalen Abstand zur gläsernen Außenfläche, ergänzend oder alternativ seitlich, insbesondere bezogen auf einen Abstand zum Flachbildschirm bzw. zum zugehörigen Ausschnitt, begrenzt ist. Gängige optische oder Hochfrequenz-Technologien ermöglichen unproblematisch eine derartige Erfassungsbereichsbegrenzung, wobei Hochfrequenzmittel, etwa gegenüber optischem Barcode-Abtasten, den Vorteil bringen, unbeeinträchtigt von möglichen Wasserdampf- oder Wasserablagerungen auf einer betreffenden Deckfläche der Detektormittel zu sein.

Wie im Rahmen der Würdigung der erfindungsgemäßen Lösung erläutert, ist es besonders günstig, einen Benutzer in verschiedenen Phasen der Informationsaufnahme zu führen und visuell bzw. akustisch zu unterstützen. Weiterbildungsgemäß bietet daher die Erfindung nicht nur die Möglichkeit, durch eine geeignete Bilddarstellung (ggf. in Verbindung mit **akustischer Ausgabe**) Hinweise an eine Bedienperson zu geben, auch kann, im Rahmen der erfindungsgemäßen Bemusterung, ein für die Detektormittel bzw. die Objektdetektion vorgesehener Oberflächenbereich der Wandelementvorrichtung bezeichnet oder abgegrenzt werden, um insoweit die Interaktion zu vereinfachen. Während eine entsprechende und etwa im Hinblick auf Hinweise, Rahmen oder dergleichen konkretisierte Bemusterung fest und dauerhaft ist, würden alternativ geeignete Aufkleber solange Hinweise an die Bedienperson geben, bis diese die gewünschten Handhabungsabläufe verinnerlicht hat und keine weiteren Hinweise auf eine Detektor-Wirkungsfläche benötigen; insoweit würden sich entfernbare Markierungen dann wiederum auf eine Gesamt-Ästhetik der Vorrichtung vorteilhaft auswirken.

In besonders bevorzugter erfinderischer Weiterbildung sind den elektronischen Steuermitteln Hochfrequenz-, Telekommunikations- und/oder Netzwerkmittel zugeordnet. Diese wirken im Rahmen der Erfindung mehrdimensional; einerseits ermöglichen sie es, dass in flexibler Weise, insbesondere auch drahtlos, an die elektronischen Steuermittel geeignete Inhaltsinformationen von beliebigen externen Informationsgebern herangeführt werden können, wobei insbesondere auch eine Internet-Funktionalität mit beliebigen externen und über das Internet angebundenen Servereinheiten erfolgen kann. Andererseits gestatten es die weiterbildungsgemäß vorgesehenen Hochfrequenz-, Telekommunikations- und/oder Netzwerkmittel, dass die elektronischen Steuermittel auf einfache und betriebssichere Weise mit nutzerseitigen, insbesondere portablen Datenverarbeitungseinheiten zusammenwirken können, wie sie etwa in Form von gängigen Smartphones, Tablet-PCs oder dergleichen Einheiten üblich und weit verbreitet sind. Dies bedeutet, dass in möglicher weiterer Ausgestaltung der Erfindung etwa die Bestätigungs- bzw. Quittungssignale nicht nur über den Flachbildschirm oder die Audio-Ausgabemittel ausgegeben werden, sondern (über drahtlose Anbindung) dann auf einem Smartphone des Benutzers erscheinen, so dass dieser dann unmittelbar die Information nutzen bzw. weiter verarbeiten kann. Dabei kommen neben gängigen Telekommunikations- bzw. Datenkommunikationsprotokollen über WLAN oder die Mobiltelefonkommunikation insbesondere auch Nahbereichstechnologien zum Tragen, wie sie etwa durch Datenkommunikation nach dem Bluetooth-Standard exemplarisch bewirkt werden können. Gerade auch die durch die Hochfrequenz-, Telekommunikations- bzw. Netzwerkmittel ermöglichte Kommunikation mitnutzerseitigen (portablen) Datenverarbeitungseinheiten ermöglicht zudem vorteilhaft eine Identifikation des Benutzers, ohne dass dieser etwa sich auf sonstige Weise (für die beschriebenen Kauf- oder Informationstransaktionen) identifizieren muss; insoweit ist nicht nur der Verarbeitungs- und Transaktionskomfort erhöht, auch ergeben sich weitergehende Möglichkeiten zur Erzeugung und Übertragung kunden- und personenbezogener Informationen, die wiederum aus Kundensicht den wahrgenommenen Wert des Systems zusätzlich erhöhen.

Eine weitere bevorzugte Ausführungsform der Erfindung, ergänzend oder alternativ zur beschriebenen Variante einer Einbindung benutzerseitiger portabler Datenverarbeitungsmittel, liegt in dem Ausbilden bzw. Vorsehen von bewegungs- und/oder berührungsempfindlicher und bevorzugt flächiger Eingabemittel, die zur manuellen Betätigung durch die Bedienperson ausgebildet sind. Wie auch die den Detektormitteln zugeordneten Bereiche sind diese weiterbildenden Eingabemittel in dieselbe (etwa verspiegelte und/oder bemusterte) gläserne Außenfläche integriert, so dass wiederum bestmögliche technische und Schutzwirkung kombiniert ist mit vorteilhaften ästhetischen Ausgestaltungsmöglichkeiten. Eine weitere Variante ermöglicht es, den Flachbildschirm selbst zur (berührungsempfindlichen) Dateneingabefläche zu verwenden, wie es ansonsten in Verbindung mit sogenannten Touch-Screens als bekannt vorauszusetzen ist. In Verbindung mit der Integration in die Wandplatte und dem Vorsehen hinter der gläsernen Außenfläche lassen sich so wiederum für einen jeweiligen Benutzungszweck geeignete und auf mögliche Zielpersonen und deren Bedienungsmöglichkeiten und -fähigkeiten zugeschnittene Anwendungen schaffen.

Dieses Argument der Flexibilisierung gilt dann auch für die weiteren möglichen und vorteilhaften Weiterbildungen der Erfindung, etwa die Integration von geeigneten Lichtflächen durch das Vorsehen von Beleuchtungsmitteln in geeignet zugeordneten Beleuchtungsausschnitten in der gläsernen Außenfläche. Insoweit ermöglicht dann die erfindungsgemäße Technologie nicht nur die Bilddarstellung und Interaktion auf bzw. mit einem Ziel- und Erfassungsbereich vor der Wandelementvorrichtung, auch kann dieser Bereich durch die weiterbildungsgemäß vorgesehenen und bevorzugten Beleuchtungsmittel in der gewünschten Weise beleuchtet werden, wobei sich zusätzlich die Möglichkeit von speziellen Lichteffekten sowie zur geeignet ästhetisch-dekorativen Integration in das erfindungsgemäße dekorative Flächenmuster bzw. in die Verspiegelung ergibt.

Wiederum eine Alternative oder ergänzend vorsehbare Weiterbildung im Rahmen der Erfindung sieht vor, dass eine Bewegungs- und/oder Anwesenheitserfassung (etwa bezogen auf eine Bedienperson) vor der Wandelementvorrichtung implementiert ist. Eine derartige Sensorik, etwa realisiert mittels gesonderter, weiter bevorzugt unsichtbar hinter der Wandplatte vorgesehener Sensoren, alternativ etwa auch realisiert durch Modifikation der Detektormittel, ermöglicht dann eine Reaktion auf Position und/oder Bewegungsmodi der anzusprechenden Person vor der Wandelementvorrichtung. Es hat sich diesbezüglich als besonders elegante Weiterbildung herausgestellt, die elektronische Bilddarstellung auf dem Flachbildschirm abhängig zu machen von derartigen positions- bzw. bewegungsspezifischen Daten, wobei die weiterbildungsgemäß vorgesehenen Skalierungsmittel eine derartige Bild-Größenveränderung, etwa in Abhängigkeit von einem unmittelbaren Abstand einer Person, vornehmen können.

Im Ergebnis wird durch die vorliegende Erfindung - sowohl die Wandelementvorrichtung in verschiedensten Ausgestaltungen als solche, als auch das erfindungsgemäße System unter Nutzung einer derartigen Wandelementvorrichtung - in überaus eleganter, synergistischer und konstruktiv einfacher Weise die Möglichkeit geschaffen, mit Personen vor einer gattungsgemäßen Wandvorrichtung in nutzbringende Informations- und Betätigungsdialoge zu treten, welche insbesondere die Möglichkeiten einer Produktinformation und Produktvermarktung signifikant verbessern. Insoweit steht zu erwarten, dass - im Sinne einer Zeitoptimierung - potentiell wenig produktive Zeit vor einem Badezimmerspiegel zusätzlich informationstechnisch und ökonomisch wirksam genutzt werden kann.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: eine schematische Ansicht einer erfindungsgemäßen Wandelementvorrichtung gemäß einem ersten Ausführungsbeispiel;
- Fig. 2:: eine Darstellung analog Fig. 1 eines zweiten Ausführungsbeispiels als Variante mit zusätzlichen Lichtquellen in Form von integrierten Beleuchtungsmitteln;
- Fig. 3(a),(b):: weitere Varianten durch Ermöglichung einer Größenveränderung einer elektrischen Bilddarstellung durch Skalierung im Rahmen einer verspiegelten Wandelementvorrichtung und
- Fig. 4:: ein schematisches Blockschaltbild einer praktischen Ausführungsform des erfindungsgemäßen Systems mit Darstellung der verschiedenen beteiligten Funktionskomponenten und deren Interaktion, auch unter Nutzung eines öffentlichen Datenübertragungsnetzes für Datenkommunikation.

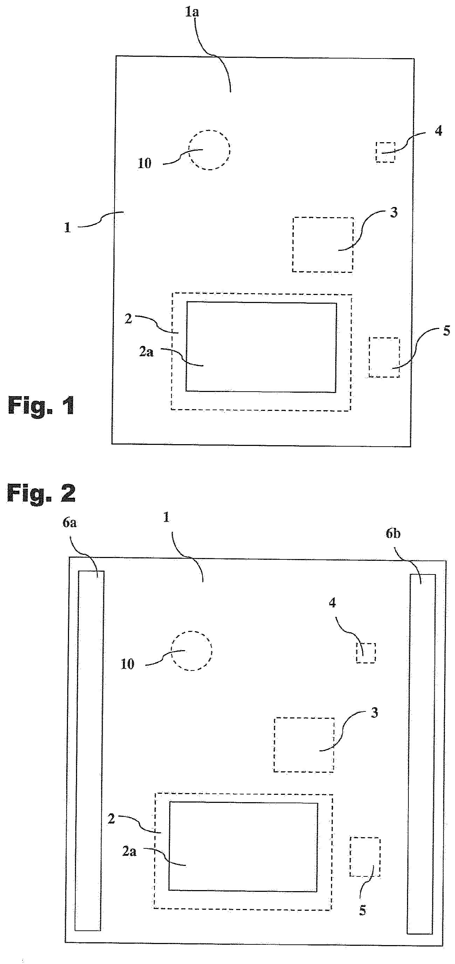

Die Fig. 1 und 2 zeigen in der schematischen Frontansicht Draufsichten auf die gläserne Außenfläche von Wandelementvorrichtungen einer ersten Ausführungsform der vorliegenden Erfindung. Dabei bezeichnet das Bezugszeichen 1 die gläserne Wandplatte des Wandelements, welche, symbolisiert durch 1a, mit einem dekorativen Flächenmuster von der Rückseite her versehen ist. Durch einen Ausschnitt 2a ist aus der Sicht der gläsernen Außenfläche die elektronische Bilddarstellung einer Bildschirmeinheit 2 (gestrichelte Linien verdeutlichen im Rahmen der gezeigten Ausführungsbeispiele hinter der Wandplatte 1 angeordnete Einheiten), welche modulartig gekapselt und mit einer elektronischen Steuereinheit durch nicht näher gezeigte Steuer- bzw. Verbindungsleitungen verbunden ist. Mit der Steuereinheit 3, welche etwa in geeigneter Weise Bildsignale empfangen und für die Darstellung auf der Bildschirmeinheit 2 aufbereiten kann, ist wiederum eine Audio-Ausgabeeinheit 10 in Form einer auf der Rückseite vorgesehenen Lautsprechereinheit verbunden.

Zur möglichen Umsetzung des erfindungsgemäßen Prinzips der Detektormittel ist, symbolisiert durch das Bezugszeichen 4, hinter dem Wandelement aus Glas und gerichtet auf einen Erfassungsraum vor der Wandplatte 1, eine Detektoreinheit in Form eines Barcode-Scanners 4 vorgesehen. Ferner ist in Form des Flächenbereichs 5 eine Eingabeeinheit in Form eines berührungsempfindlichen Flächenabschnitts (in der Art eines zur Steuerung von PCs bekannten Touchpads) verbunden.

Die Fig. 2 als Variante der Fig. 1 ist strukturell weitgehend identisch, weist nur im jeweiligen seitlichen Bereich der Wandplatte 1 ein Paar von hinterleuchteten Flächenabschnitten 6a, 6b auf, welche in Form von im rückwärtigen Bereich vorgesehenen, langgestreckten Leuchtmitteln realisiert sind, welche sich durch aus der Bemusterung freigelegten Ausschnitten hindurch durch die gläserne Wandplatte in den Frontbereich lichtleitend erstrecken und so für eine zusätzliche Beleuchtung sorgen. Geeignete Leuchtmittel können neben Entladungslampen insbesondere auch LED, CCFL oder dergleichen sein.

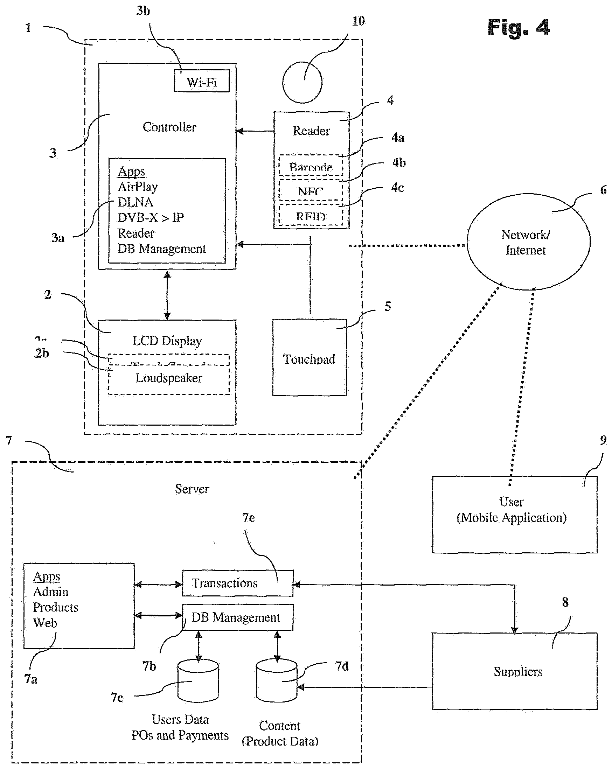

Im Betrieb der in den Fig. 1, 2 gezeigten Realisierungsform würde einem Benutzer über die Bildschirmeinheit 2 eine potentiell beliebige elektronische Bilddarstellung gezeigt. Insbesondere könnte dann der Benutzer aufgefordert werden, einen Gegenstand durch die Detektormittel 4 identifizieren zu lassen; zu diesem Zweck würde dann die Bedienperson dieses Objekt in geeigneter Weise in einen (insbesondere räumlich vorbestimmten) Erfassungsbereich vor dem Scanner 4 halten, woraufhin dann, nach einem Erfassen oder Erkennen des Objekts (wobei etwa in ansonsten bekannter Weise ein darauf enthaltener Barcode abgelesen werden würde) eine geeignete Quittierung durch eine geeignete Visualisierung mittels der Bildschirmeinheit 2 erfolgt; ergänzend kann auch, wie weiter nachstehend im Zusammenhang mit der Fig. 4 zu erläutern sein wird, eine Ausgabe eines Bestätigungs- oder Quittungssignals auf eine mobile Datenverarbeitungseinheit eines Benutzers ergehen.

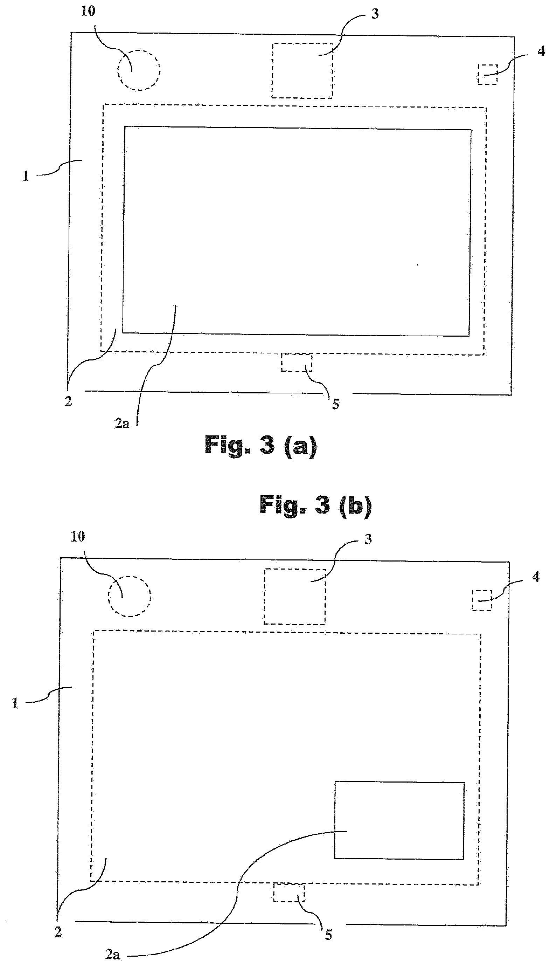

Anhand der Fig. 3a und 3b wird eine zweite Ausführungsform der Erfindung erläutert, wobei sämtliche Bezugszeichen, analog zu den vorbezeichneten oder nachbezeichneten Figuren, jeweils gleiche bzw. äquivalente Funktionskomponenten bezeichnen und insoweit als durchgehend offenbart gelten sollen.

So zeigt das Ausführungsbeispiel der Fig. 3a und 3b wiederum eine (hier verspiegelte) Wandelementvorrichtung 1, welche von einer großflächigen Flachbildschirmeinheit 2 mit geeignetem Ausschnitt 2a hinterlegt ist. Wiederum ist ein Membranlautsprecher 10 und eine Barcode-Lesereinheit als Detektormittel 4 vorhanden, ebenso wie eine Touchpad-Eingabeeinheit 5. Die Steuereinheit 3 führt elektronisch die verschiedenen Signale zusammen und bewirkt eine elektronische Datenkommunikation hin und zurück zur Einheit.

Die Verspiegelung der in den Fig. 3a, 3b gezeigten Wandplatte 1 ist als halbdurchlässige Verspiegelung realisiert, dergestalt, dass bei ganzflächig angesteuerter Bildschirmeinheit 2 der vollständige Ausschnitt 2a (da angesteuert) durch die Spiegelfläche 1 hindurch sichtbar ist. Sorgt jedoch ein neben bzw. hinter der Baugruppe 5 vorgesehener Anwesenheits- bzw. Bewegungsmelder (z.B. auf Mikrowellenbasis wirkend und damit zum Durchdringen der Wandplatte 1 ausgebildet) für ein Erfassungssignal einer vor der Einheit stehenden Person, kann etwa als Reaktion darauf eine in der Steuereinheit 3 vorgesehene Skalierungseinheit für die wirksame Bilddarstellung 2a des Flachbildschirms 2, wie in Fig. 3b gezeigt, auf ein kleineres Format skalieren. Entsprechend würde dann als Ausschnitt lediglich das Feld 2a in der Außenflächenansicht der Fig. 3b erkennbar sein; die halbdurchlässige Verspiegelung bewirkt dann im übrigen Flächenbereich des Flachbildschirms 2 eine Spiegelwirkung. Insbesondere für kosmetische bzw. sanitäre Anwendungen ist eine solche Variante besonders reizvoll, wobei weiter bevorzugt (wie im übrigen auch für sämtliche Varianten geltend) die gezeigten Wandelementvorrichtungen geeignet wasser-, dampf- bzw. feuchtigkeitsgeschützt ausgestaltet sein können.

Anhand der Blockschaltbilddarstellung der Fig. 4 wird verdeutlicht, wie eine Wandelementvorrichtung, etwa der anhand der Fig. 1 bis 3 gezeigten Art und durch die gestrichelte Linie im linken oberen Bereich der Fig. 4 verdeutlicht, mit weiteren Einheiten netzgebunden und bevorzugt drahtlos kommuniziert, mit dem Zweck, verschiedenste Informations-, Anzeige-, Bestell-, Quittierungs- und Rückmeldefunktionalitäten zu realisieren. Wiederum entsprechen die Funktionskomponenten den oben beschriebenen Bezugszeichen, wobei zusätzlich zur Steuereinheit "Controller" 3, gemäß Bezugszeichen 3a, exemplarisch verschiedene Anwendungsprogramme bzw. Nutzer- und Betriebssystem-Funktionalitäten exemplarisch dargestellt sind. Gleichermaßen wird für die Detektoreinheit "Reader" 4 exemplarisch als Varianten dargestellt, dass etwa Barcodes, NFC oder RFID (4a bis 4c) zusammen oder alternativ verarbeitet werden können. Der Anzeigeeinheit 2 ist die Lautsprechereinheit (hier 2b) sowie, fakultativ, eine Mikrophon-Einheit zugeordnet. Diese Einheit kommuniziert (drahtlos oder drahtgebunden) über ein öffentliches Datenübertragungsnetz 6, insbesondere das Internet, mit einer entfernt angebundenen Servereinheit 7, auf welcher, geeignet servergestützt, verschiedenen Transaktionen "Transactions" 7c, Anwendungs- und Betriebssystemanwendungen 7a, Datenbank-Funktionalitäten 7b und zugehörige Datenbank-Ablagefunktionalitäten 7c, 7d ablaufen können. Dieser Servereinheit können beispielsweise Funktionalitäten eines Lieferanten "Supplier" 8 oder dergleichen Content-Lieferanten zugeordnet sein. Als weiterer Teilnehmer im gezeigten (öffentlichen) Netzwerk 6 ist eine mobile Datenverarbeitungseinheit "User" 9 vorgesehen, welche typischerweise einer Benutzer- bzw. Bedienperson unmittelbar zugeordnet werden kann und es dieser ermöglicht, aktiv eine Bedien- oder Betätigungsfunktion durchzuführen, alternativ auch (passiv) geeignete audio-visuelle Darstellungen über geeignete Mobilanwendungen "Mobile Applications" empfangen.

Ein möglicher Transaktionsbetrieb der in Fig. 4 gezeigten Vorrichtung könnte wie folgt ablaufen, aufbauend auf dem vorbeschriebenen Beispiel, dass eine Bedienperson mittels der Detektoreinheit 4 einen Barcode scannt (Funktionalität 4a), woraufhin dann, durch Anbindung über das Netzwerk 6 und Heranführen von Serverdaten 7 (ggf. eines externen Datenlieferanten "Supplier" 8) diese Inhalte durch Wirkung der Steuereinheit 3 auf der Display-Einheit 2 angezeigt werden. Mit dieser Anzeige kann insbesondere dann auch ein konkretes Kaufangebot, eingeschlossen Preis, Zahlungsmodalitäten oder dergleichen, verbunden sein, wobei parallel insbesondere auch dem Benutzer über seine mobile Datenverarbeitungsarbeit 9 dort geeignete Bestätigungs-, Eingabe- oder Zahlungsoptionen zur Verfügung stehen.

Sollte dann der Benutzer, z.B. über die Eingabeeinheit 5, einen Kauf vornehmen und eine entsprechende Kauftransaktion bestätigen (wobei etwa, in einem Hotelkontext, dann nicht nur eine Verrechnung über geeignete Hotel-Abrechnungssysteme erfolgen könnte, sondern das Hotel gleichermaßen auch für eine physische Distribution des gekauften Produkts sorgen kann), würde dann wiederum durch Wirkung der Steuereinheit 3 und geeignete Kommunikation über das Internet die Transaktion serverseitig verbucht werden, so dass dann mit geringstem Bedienungsaufwand eine (potentiell komplexe) Transaktion abgeschlossen werden kann; der Nutzer wird unmittelbar als Konsument durch den Kauf befriedigt, gleichzeitig kann ein Produktanbieter den nutzerseitigen (und etwa durch die elektronische Mediendarstellung auf der Display-Einheit 2 erzeugten) Kaufimpuls unmittelbar und kurzfristig und damit mit hoher Konversionsrate in die gewünschte Transaktion umsetzen.

Die vorliegende Erfindung ist nicht auf die gezeigten Ausführungsbeispiele oder den lediglich exemplarisch beschriebenen Betriebsablauf beschränkt. Vielmehr ergeben sich nahezu beliebige Möglichkeiten, bidirektionale Kommunikations-, Bestätigungs-, Kauf- und Informationstransaktionen für beliebige Einsatzkontexte abzubilden, dabei über die beteiligten Einheiten (netzgestützt) die Bedienperson flexibel einzubinden und so einen hohen Bedienungskomfort und damit potentiell hohe Kundenzufriedenheit mit schneller und unmittelbarer Transaktion zu kombinieren.

## Patentansprüche

1. Wandelementvorrichtung mit einer mindestens einen Anzeigebereich für einen Bildschirm (2) und nutzerseitig eine gläserne Außenfläche ausbildenden Wandplatte (1), die durch Verspiegeln, voll- oder teilflächiges Lackieren, Hinterlegen, Ätzen, Sandstrahlen, Bedrucken und/oder Bedampfen, insbesondere auf der der Außenfläche entgegengesetzten Rückseite, mit einer Verspiegelung und/oder einem dekorativen Flächenmuster (1a) versehen ist, wobei der Anzeigebereich als mindestens ein Ausschnitt (2a) in der Verspiegelung bzw. dem Flächenmuster realisiert ist, dem auf der Rückseite ein Flachbildschirm (2) zur elektronischen Bilddarstellung durch die gläserne Außenfläche hindurch zugeordnet ist, wobei auf der Rückseite dem Ausschnitt benachbart Detektormittel (4) zugeordnet sind, die zum Erfassen eines Musterbildes eines bevorzugt berührungslos neben dem Ausschnitt gehaltenen Objekts ausgebildet sind und dem Flachbildschirm (2) zugeordnete elektronische Steuermittel (3) so mit den Detektormitteln (4) zusammenwirken, dass als Reaktion auf eine Erfassung eines vorbestimmten Musterbildes die Steuermittel (3) die Erzeugung eines durch die Wandplatte (1) hindurch wirkenden Bestätigungs- und/oder Quittungssignals bewirken,
**dadurch gekennzeichnet,**
**dass** die visuell-optischen Detektormittel zum Vornehmen einer Bilderfassung des Objekts ausgebildet sind, auf Basis derer dann die Erzeugung des Bestätigungs- bzw. Quittungssignals bewirkt wird, und
**dass** das Bestätigungs- bzw. Quittungssignal ein auf dem Flachbildschirm (2) erzeugtes visuelles Signal zur Bestätigung der Erfassung des Objekts und zur Darstellung von dem erfassten Objekt zugehörigen Informationen ist.

2. Vorrichtung nach Anspruch 1,
**dadurch gekennzeichnet,**
**dass** die Detektormittel (4) zum Abtasten eines Barcodes als Musterbild ausgebildet sind.

3. Vorrichtung nach Anspruch 1 oder 2,
**dadurch gekennzeichnet,**
**dass** die Detektormittel (4) in einem maximalen frontalen Erfassungsbereich wirken, der sich weniger als das 3-fache, bevorzugt weniger als das 2-fache, weiter bevorzugt weniger als das 1-fache, der Bildschirmdiagonale des Flachbildschirms (2) auf der Außenfläche erstreckt.

4. Vorrichtung nach einem der Ansprüche 1 bis 3,
**dadurch gekennzeichnet,**
**dass** die Detektormittel (4) in einem maximalen seitlichen Erfassungsbereich wirken, der sich seitlich weniger als das 1,5-fache, bevorzugt weniger als das 0,8-fache, weiter bevorzugt weniger als das 0,5-fache, von einem Seitenrand des Ausschnitts auf der Außenfläche erstreckt.

5. Vorrichtung nach Anspruch 4,
**dadurch gekennzeichnet,**
**dass** die Außenfläche im Bereich des seitlichen Erfassungsbereichs mit einer dauerhaften und/oder entfernbaren Markierung, insbesondere einer kennzeichnenden Bemusterung, einem schriftbildlichen Hinweis und/oder einem Aufkleber, versehen ist.

6. Vorrichtung nach einem der Ansprüche 1 bis 5,
**dadurch gekennzeichnet,**
**dass** den elektronischen Steuermitteln (3) Hochfrequenz-, Telekommunikations- und/oder Netzwerkmittel so zugeordnet sind, dass als Reaktion auf die Erfassung des vorbestimmten Musterbildes eine elektronische Kauf- und/oder Informationstransaktion durch Datenkommunikation mit über ein bevorzugt öffentliches Datenübertragungsnetz (6) angebundenen externen Servermitteln (7) durchführbar ist.

7. Vorrichtung nach einem der Ansprüche 1 bis 6,
**gekennzeichnet durch** bewegungs- und/oder berührungsempfindliche und bevorzugt flächige Eingabemittel (5), die zur manuellen Betätigung auf und/oder vor der Außenfläche durch eine Bedienperson ausgebildet sind.

8. Vorrichtung nach Anspruch 7,
**dadurch gekennzeichnet,**
**dass** die berührungsempfindlichen, flächigen Eingabemittel (5) auf einer Darstellungsoberfläche des Flachbildschirms (2) und/oder durch den Flachbildschirm (2) realisiert sind.

9. Vorrichtung nach einem der Ansprüche 1 bis 8,
**dadurch gekennzeichnet,**
**dass** den elektronischen Steuermitteln (3) zugeordnete Audio-Ausgabemittel (10) so mit der Wandplatte (1) auf der Rückseite akustisch gekoppelt sind, dass die Wandplatte (1) als Resonanzfläche für ein Audio-Ausgabesignal der Audio-Ausgabemittel (10) wirkt.

10. Vorrichtung nach einem der Ansprüche 1 bis 9,
**dadurch gekennzeichnet,**
**dass** der Wandplatte (1) elektrische Beleuchtungsmittel (6a) so zugeordnet sind, dass diese in der gläsernen Außenfläche sichtbar sind, insbesondere in dieser einen Beleuchtungsausschnitt ausbilden.

11. Vorrichtung nach einem der Ansprüche 1 bis 10,
**dadurch gekennzeichnet,**
**dass** den elektronischen Steuermitteln (3) Skalierungsmittel zum Durchführen einer Größenänderung von auf dem Flachbildschirm (2) dargestellten visuellen Informationen zugeordnet sind.

12. Vorrichtung nach Anspruch 11,
**dadurch gekennzeichnet,**
**dass** die Skalierungsmittel mit durch die gläserne Außenfläche hindurch wirkenden Anwesenheits- und/oder Bewegungsdetektionsmitteln zusammenwirken, insbesondere als Reaktion auf eine Annäherung einer Person an die gläserne Außenfläche die Größenänderung bewirken.

13. System zur visuellen Informationsanzeige und zur datenmäßigen Interaktion und zur Datenkommunikation betreffend die dargestellten visuellen Informationen mit der Wandelementvorrichtung nach einem der Ansprüche 1 bis 12 für die Darstellung der visuellen Informationen auf dem Flachbildschirm (2) und einer einer Bedien- und/oder Betrachterperson zugeordneten mobilen, manuell handhabbaren Datenverarbeitungseinheit (9), die zum unmittelbaren drahtlosen Zusammenwirken mit den Steuermitteln (3) und/oder zum mittelbaren drahtlosen Zusammenwirken mit diesen über ein drahtloses öffentliches Datenübertragungsnetz (6) ausgebildet ist, zum Empfangen des durch die Steuermittel (3) erzeugten Betätigungs- bzw. Quittungssignal ausgebildet ist und als Reaktion darauf eine Informationsausgabe auf der mobilen Datenverarbeitungseinheit (9) bewirkt.

## Claims

1. A wall element device having a wall panel (1) realizing at least one display area for a screen (2) and a glass outer surface on the side of the user and provided with a silvering and/or a decorative pattern (1a), in particular on the reverse side opposite the outer surface, by silvering, full or partial surface painting, back coating, etching, sandblasting, printing and/or vaporizing, the display area being realized as at least one cutout (2a) in the silvering or the pattern, a flat screen (2) for electronic image display through the glass outer surface being assigned to the cutout (2a) on the reverse side, detector means (4) being assigned to the cutout in an adjacent manner on the reverse side, the detector means (4) being designed for detecting a pattern image of an object held next to the cutout in a preferably contactless manner, and electronic control means (3) assigned to the flat screen (2) interacting with the detector means (4) in such a manner that, in response to a detection of a predefined pattern image, the control means (3) cause the generation of a confirmation and/or receipt signal acting through the wall panel (1),
**characterized in that**
the visual-optical detector means are designed for carrying out an image capture of the object on the basis of which then the generation of the confirmation or receipt signal is caused, and
the confirmation or receipt signal is a visual signal generated on the flat screen (2) for confirming the detection of the object and for displaying information associated with the detected object.

2. The device according to claim 1,
**characterized in that**
the detector means (4) are designed for scanning a barcode as a pattern image.

3. The device according to claim 1 or 2,
**characterized in that**
the detector means (4) act in a maximum frontal detection area which extends less than thrice, preferably less than twice, more preferably less than once the screen diagonal of the flat screen (2) on the outer surface.

4. The device according to any one of claims 1 to 3,
**characterized in that**
the detector means (4) act in a maximum lateral detection area which extends less than 1.5 times, preferably less than 0.8 times, more preferably less than 0.5 times from a lateral edge of the cutout on the outer surface in the lateral direction.

5. The device according to claim 4,
**characterized in that**
the outer surface is provided with a permanent and/or removable marking, in particular a distinctive pattern, a written information and/or a sticker, in the area of the lateral detection area.

6. The device according to any one of claims 1 to 5,
**characterized in that**
high frequency, telecommunication and/or network means are assigned to the electronic control means (3) in such a manner that, in response to the detection of the predefined pattern image, an electronic purchase and/or information transaction can be performed by means of data communication with external server means (7) which are connected via a preferably public data transmission network (6).

7. The device according to any one of claims 1 to 6,
**characterized by** motion-sensitive and/or touch-sensitive and preferably flat input means (5) which are designed for manual actuation on and/or in front of the outer surface by an operator.

8. The device according to claim 7,
**characterized in that**
the touch-sensitive, flat input means (5) are realized on a display surface of the flat screen (2) and/or by the flat screen (2).

9. The device according to any one of claims 1 to 8,
**characterized in that**
audio output means (10) assigned to the electronic control means (3) are acoustically coupled to the wall panel (1) on the reverse side in such a manner that the wall panel (1) acts as a resonance surface for an audio output signal of the audio output means (10).

10. The device according to any one of claims 1 to 9,
**characterized in that**
electrical lighting means (6a) are assigned to the wall panel (1) in such a manner that said lighting means (6a) are visible in the glass outer surface, in particular realize a lighting cutout in said glass outer surface.

11. The device according to any one of claims 1 to 10,
**characterized in that**
the electronic control means (3) are assigned scaling means for performing a change in size of visual information displayed on the flat screen (2).

12. The device according to claim 11,
**characterized in that**
the scaling means interact with presence and/or movement detection means acting through the glass outer surface, in particular cause the change in size in response to a person approaching the glass outer surface.

13. A system for visual information display and for data-related interaction and for data communication relating to the displayed visual information, the system comprising the wall element device according to any one of claims 1 to 12 for the display of the visual information on the flat screen (2) and a mobile data processing unit (9) which is assigned to an operator and/or a viewer and which can be handled manually, the data processing unit (9) being designed for direct wireless interaction with the control means (3) and/or for indirect wireless interaction with said control means (3) via a wireless public data transmission network (6), and being designed for receiving the actuation or receipt signal generated by the control means (3) and causing an information output on the mobile data processing unit (9) in response to the reception of said signal.

## Revendications

1. Dispositif d'élément de paroi ayant un panneau de paroi (1) qui réalise au moins une zone d'affichage pour un écran (2) et une surface extérieure de verre du côté d'utilisateur et qui est pourvu d'une argenture et/ou d'un motif superficiel décoratif (1a), notamment sur le côté arrière qui est opposé à la surface extérieure, par argenture, peinture sur la surface entière ou sur une partie de la surface, revêtement arrière, gravure, sablage, impression et/ou évaporation sous vide, la zone d'affichage étant réalisée comme au moins une découpe (2a) dans l'argenture ou dans le motif superficiel, un écran plat (2) destiné à l'affichage d'image électronique à travers la surface extérieure de verre étant assigné à la découpe (2a) sur le côté arrière, des moyens de détecteur (4) étant assignés à la découpe de manière adjacente sur le côté arrière, lesdits moyens de détecteur (4) étant destinés à détecter une image de motif d'un objet placé, de préférence sans contact, à côté de la découpe, et des moyens de commande (3) électroniques assignés à l'écran plat (2) interagissant avec les moyens de détecteur (4) de telle manière qu'en réaction à une détection d'une image de motif prédéterminée, les moyens de commande (3) entraînent la génération d'un signal de confirmation et/ou d'acquittement qui agit à travers le panneau de paroi (1),
**caractérisé en ce que**
les moyens de détecteur visuels et optiques sont réalisés afin d'effectuer une capture d'image de l'objet sur la base de laquelle est ensuite entrainée la génération du signal de confirmation ou d'acquittement, et
le signal de confirmation ou d'acquittement est un signal visuel généré sur l'écran plat (2) pour confirmer la détection de l'objet et pour afficher des informations associées à l'objet détecté.

2. Dispositif selon la revendication 1,
**caractérisé en ce que**
les moyens de détecteur (4) sont destinés à balayer un code-barres comme image de motif.

3. Dispositif selon la revendication 1 ou la revendication 2,
**caractérisé en ce que**
les moyens de détecteur (4) agissent dans une zone de détection frontale maximale qui s'étend moins de trois fois, de préférence moins de deux fois, plus préférentiellement moins d'une fois la diagonale de l'écran plat (2) sur la surface extérieure.

4. Dispositif selon l'une quelconque des revendications 1 à 3,
**caractérisé en ce que**
les moyens de détecteur (4) agissent dans une zone de détection latérale maximale qui s'étend moins de 1,5 fois, de préférence moins de 0,8 fois, plus préférentiellement moins de 0,5 fois d'un bord latéral de la découpe sur la surface extérieure dans la direction latérale.

5. Dispositif selon la revendication 4,
**caractérisé en ce que**
la surface extérieure est pourvue d'un marquage permanent et/ou amovible, notamment d'un motif caractéristique, d'une indication écrite et/ou d'une étiquette, dans la région de la zone de détection latérale.

6. Dispositif selon l'une quelconque des revendications 1 à 5,
**caractérisé en ce que**
des moyens de haute fréquence, de télécommunication et/ou de réseau sont assignés aux moyens de commande (3) électroniques de telle manière qu'en réaction à la détection de l'image de motif prédéterminée, une transaction électronique d'achat et/ou d'information peut être réalisée par une communication de données avec des moyens de serveur (7) externes qui sont connectés via un réseau (6) de transmission de données, de préférence public.

7. Dispositif selon l'une quelconque des revendications 1 à 6, **caractérisé par** des moyens d'entrée (5) sensibles au déplacement et/ou au contact et, de préférence, plans qui sont destinés à l'actionnement manuel sur et/ou devant la surface extérieure par un opérateur.

8. Dispositif selon la revendication 7,
**caractérisé en ce que**
les moyens d'entrée (5) sensibles au contact et plans sont réalisés sur une surface d'affichage de l'écran plat (2) et/ou par l'écran plat (2).

9. Dispositif selon l'une quelconque des revendications 1 à 8,
**caractérisé en ce que**
des moyens (10) de sortie audio assignés aux moyens de commande (3) électroniques sont couplés acoustiquement au panneau de paroi (1) sur le côté arrière de telle manière que le panneau de paroi (1) agit comme surface de résonance pour un signal de sortie audio des moyens (10) de sortie audio.

10. Dispositif selon l'une quelconque des revendications 1 à 9,
**caractérisé en ce que**
des moyens d'éclairage (6a) électriques sont assignés au panneau de paroi (1) de telle manière que lesdits moyens d'éclairage (6a) sont visibles dans la surface extérieure de verre, notamment réalisent une découpe d'éclairage dans ladite surface extérieure.

11. Dispositif selon l'une quelconque des revendications 1 à 10,
**caractérisé en ce que**
des moyens de mise à l'échelle qui sont destinés à réaliser un changement dimensionnel d'informations visuelles qui sont affichées sur l'écran plat (2) sont assignés aux moyens de commande (3) électroniques.

12. Dispositif selon la revendication 11,
**caractérisé en ce que**
les moyens de mise à l'échelle interagissent avec des moyens de détection de présence et/ou de déplacement qui agissent à travers la surface extérieure de verre, notamment effectuent le changement dimensionnel en réaction à une approche d'une personne vers la surface extérieure de verre.

13. Système d'affichage d'informations visuel et d'interaction concernant des données et de communication de données concernant les informations visuelles affichées, ledit système ayant le dispositif d'élément de paroi selon l'une quelconque des revendications 1 à 12 pour l'affichage des informations visuelles sur l'écran plat (2) et une unité (9) de traitement de données mobile et manuellement maniable qui est assignée à un opérateur et/ou un spectateur et qui est réalisée pour l'interaction directe sans fil avec les moyens de commande (3) et/ou pour l'interaction indirecte sans fil avec lesdits moyens de commande (3) via un réseau (6) de transmission de données public sans fil, qui est réalisée pour recevoir le signal d'actionnement ou d'acquittement généré par les moyens de commande (3) et qui effectue une sortie d'informations sur l'unité (9) de traitement de données mobile en réaction audit signal.
